# EUROPEAN PATENT APPLICATION

(11) **EP 4 618 505 A1**
(43) Date of publication of application: **17.09.2025**
(21) Application number: 25163766.6
(22) Date of filing: 14.03.2025
(51) Int. Cl.: H04L 47/2416, H04L 47/24, H04L 47/263, H04L 47/26, H04L 47/30, H04L 47/625, H04L 47/6275

(54) **DEVICE, METHOD, AND PROGRAM**

(30) Priority: 14.03.2024 JP 2024040364
(71) Applicant: Yokogawa Electric Corporation, Tokyo 180-8750 (JP)
(72) Inventor: MITO, Kenta, Musashino-shi, Tokyo 180-8750, (JP); OHNO, Takeshi, Musashino-shi, Tokyo 180-8750, (JP)
(74) Representative: Winter, Brandl - Partnerschaft mbB

(57) **Abstract**

A device (10) includes a processing unit (10b) configured to store a transmission frame transmitted through a communication flow in an RT transmission buffer for RT communication in a case where a priority of the communication flow is valid, and store the transmission frame in a transmission buffer for non-RT communication in a case where the priority is invalid, transmit the transmission frame stored in the RT transmission buffer earlier than the transmission frame stored in the transmission buffer, and perform flow control of a data link layer with a direct communication partner.

## Description

### FIELD

The present invention relates to a device, a method, and a program.

### BACKGROUND

A technique for controlling various state quantities in an industrial process and performing advanced automatic operation in plants, factories, and the like is known. For the control, RT communication that is control communication requiring real time (RT) performance may be used (see, for example, "Open Process Automation (O-PAS)", [online], [searched on March 14, 2023], Internet <URL:
https://www.productivity.be/en/page.php?r=O-PAS>).

However, with the above technique, it may be difficult to make both packet loss and increase in communication delay substantially zero at the same time in RT communication. An object of the present invention is to make both packet loss and increase in communication delay substantially zero at the same time in RT communication.

### SUMMARY

According to an aspect of the embodiments, a device includes a processing unit configured to store a transmission frame transmitted through a communication flow in a real time (RT) transmission buffer for RT communication in a case where a priority of the communication flow is valid, and store the transmission frame in a transmission buffer for non-RT communication in a case where the priority is invalid, transmit the transmission frame stored in the RT transmission buffer earlier than the transmission frame stored in the transmission buffer, and perform flow control of a data link layer with a direct communication partner.

According to an aspect of the embodiments, a method executed by a computer to perform processing of storing a transmission frame transmitted through a communication flow in an RT transmission buffer for RT communication in a case where a priority of the communication flow is valid, and storing the transmission frame in a transmission buffer for non-RT communication in a case where the priority is invalid, transmitting the transmission frame stored in the RT transmission buffer earlier than the transmission frame stored in the transmission buffer, and performing flow control of a data link layer with a direct communication partner.

According to an aspect of the embodiments, a program causing a computer to execute processing of storing a transmission frame transmitted through a communication flow in an RT transmission buffer for RT communication in a case where a priority of the communication flow is valid, and storing the transmission frame in a transmission buffer for non-RT communication in a case where the priority is invalid, transmitting the transmission frame stored in the RT transmission buffer earlier than the transmission frame stored in the transmission buffer, and performing flow control of a data link layer with a direct communication partner.

### BRIEF DESCRIPTION OF THE DRAWINGS

FIG. 1 is a network configuration diagram of a control system;
FIG. 2 is a network configuration diagram of the related art;
FIG. 3 is a functional configuration diagram of a terminal node of the related art;
FIG. 4 is a functional configuration diagram of a relay node of the related art;
FIG. 5 is a diagram of a management table;
FIG. 6 is a network configuration diagram of a control system according to the present embodiment;
FIG. 7 is a functional configuration diagram of a terminal node;
FIG. 8 is a diagram of a communication flow management table;
FIG. 9 is a functional configuration diagram of a relay node;
FIG. 10 is a flowchart of an RT buffer storage unit;
FIG. 11 is a flowchart of an RT buffer transmission unit;
FIG. 12 is a flowchart of an RT transmission unit of a terminal node;
FIG. 13 is a flowchart of an RT reception unit of a terminal node;
FIG. 14 is a flowchart of an RT transmission unit of a relay node;
FIG. 15 is a flowchart of an RT reception unit of a relay node; and
FIG. 16 is a diagram of a hardware configuration.

### DETAILED DESCRIPTION OF THE PREFERRED EMBODIMENTS

Hereinafter, embodiments of the present application will be described with reference to the drawings. The embodiment is merely an example, and the present invention is not limited to the embodiment. The same elements are denoted by the same reference numerals, and the description of the same processing will be omitted. The embodiments can be appropriately combined. Functional blocks unique to the related art will be denoted by reference numerals followed by "#", and the functional blocks and processing unique to the present application will be described with thick frames.

### Premise:

Before describing the present embodiment, terms that are a premise of the present embodiment, a control system used for operation of a plant or the like, and a network configuration of the control system will be described first.

### Description of terms:

First, terms used in the present embodiment will be described. Control communication is roughly classified into two types. The first is communication required in control cycle processing without direct human intervention, and is communication between controllers, and communication between a controller and a device. The second is communication between a personal computer (PC) and a controller operated and monitored by a person. Communication required in control cycle processing, such as communication between terminal nodes such as controllers in a control system, is required to have a higher RT capability than communication between a PC and a controller.

Flow control refers to limiting the transmission amount between communication nodes to prevent the reception buffer of a predetermined layer in in the open systems interconnection (OSI) reference model from overflowing. For example, flow control includes flow control of a transport layer represented by the transmission control protocol (TCP) which is the fourth layer and flow control of the data link layer represented by Ethernet (registered trademark) which is the second layer. Flow control of the transport layer limits the transmission amount so that the reception buffer of the transport layer between terminal nodes does not overflow, and acts on End-to-End communication. On the other hand, flow control of the data link layer limits the transmission amount so that the reception buffer of the data link layer between nodes directly connected by a network does not overflow.

A communication port is used for a terminal node to establish network connection with a relay node, and includes a network interface card (NIC) and the like. The communication port operates independently of a CPU module in terms of hardware, and mediates communication data between the CPU module and the network. The communication port performs processing via the physical layer and the data link layer of the OSI reference model.

Packet loss (frame loss) refers to the loss of packets or the like due to the overflow of packets or the like from a reception buffer that has become full of packets, frames, or the like of non-RT communication for which RT capability is not required in the middle of an RT communication network.

The phrase "increase in communication delay of RT communication" refers to the fact that the amount of time that RT communication processing is delayed increases due to the amount of non-RT communication processing performed before RT communication processing of each node, and the time from when the transmission request is issued to when the transmission request reaches the communication partner varies. For example, if non-RT communication packets are already stored in the same transmission buffer before RT communication packets are stored in the transmission buffer, RT communication processing is delayed until the previously stored non-RT communication packets are transmitted.

The maximum reception band of a terminal node refers to a reception amount of data for one second that can be stably received by an application of the terminal node with almost no packet loss. For example, in the case of an embedded device having low central processing unit (CPU) capability, in 1000BASE-T Ethernet communication, the reception processing capability of the embedded device is lower than 1 Gbps which is the limit band (maximum communication band) of the communication medium. Almost no packet loss refers to the fact that, for example, in 1000BASE-T Ethernet communication, packet loss does not occur continuously, and even if packet loss occurs, the frequency is about once every several tens of minutes.

### Control system:

Next, a process control system using a communication node to which the present invention is applied will be described using a control system 1 as an example. Note that the present embodiment does not limit the scope of its application, and can be applied to any system such as a system using RT communication and non-RT communication.

In a plant, a factory, or the like, the control system 1 controls various state quantities (e.g., pressure, temperature, flow rate, and the like) in an industrial process and performs advanced automatic operation. The control requires RT capability, and control communication used for the control also needs to be RT communication. Two things are done to achieve RT communication. First, a network dedicated to control communication is constructed separately from networks for other purposes. Second, the RT communication is achieved by a vendor-specific communication protocol such as Vnet/IP (Internet Protocol).

On the other hand, with the emergence of embedded devices (e.g., controller or the like) having an open communication protocol (e.g., TCP/IP, OLE for process control (OPC), unified architecture (UA), or the like), recent open control systems have been able to exchange data with various communication partners on a network without distinction. In addition, the expansion of the communication band of an open network (e.g., Ethernet or the like) has made it possible to route control communication and communication for other uses through the same network.

The background to this is that the user of the control system wants an environment that keeps the introduction cost of the control system down and makes it easy to incorporate digital transformation (DX) technology, and the user is working with the vendor to achieve this, trying to create a multi-vendor environment in which control functions are connected by an open network. Therefore, in a control system in a multi-vendor environment, it is necessary to achieve RT communication by using a general-purpose communication protocol such as TCP/IP.

### Network configuration:

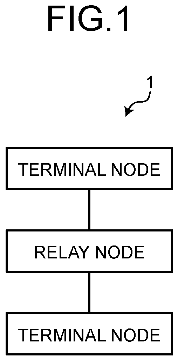

Next, a network configuration of the control system 1 will be described. FIG. 1 is a network configuration diagram of the control system 1. As illustrated in FIG. 1, the network configuration of the control system 1 includes a terminal node and a relay node which are communication nodes. Note that the configuration of FIG. 1 is merely an example, and the number of nodes and the like are not limited.

The terminal nodes illustrated in FIG. 1 are communication nodes at both ends of end-to-end communication. The terminal node transmits and receives communication data by an application or the like. The terminal node includes, for example, a controller such as an embedded device or a general-purpose device, a PC, a network-compatible input/output device, and the like.

The relay node is a communication node for connecting a terminal node and a terminal node by a network, is excellent in relaying communication data at a high speed, and can transmit and receive communication data without causing packet loss up to the limit band of the communication medium of the network. The relay node includes, for example, a communication device having a plurality of communication ports such as a layer 2 switch (L2 SW) such as a network switch and a layer 3 switch (L3 SW) such as a router.

The application operated by the terminal node is divided into a control application requiring RT processing and a non-control application not requiring RT processing. The high-priority control application is preferentially processed over the low-priority non-control application by fixed priority scheduling of a real-time operating system (RTOS). Accordingly, RT processing of the control application is achieved. The control application also requires RT capability for communication. On the other hand, a non-control application that is not subjected to RT processing does not require RT communication. Note that the RTOS refers to a module of a communication protocol incorporated in the RTOS. The communication protocol is desirably subjected to RT processing similarly to the RT task.

### Related art:

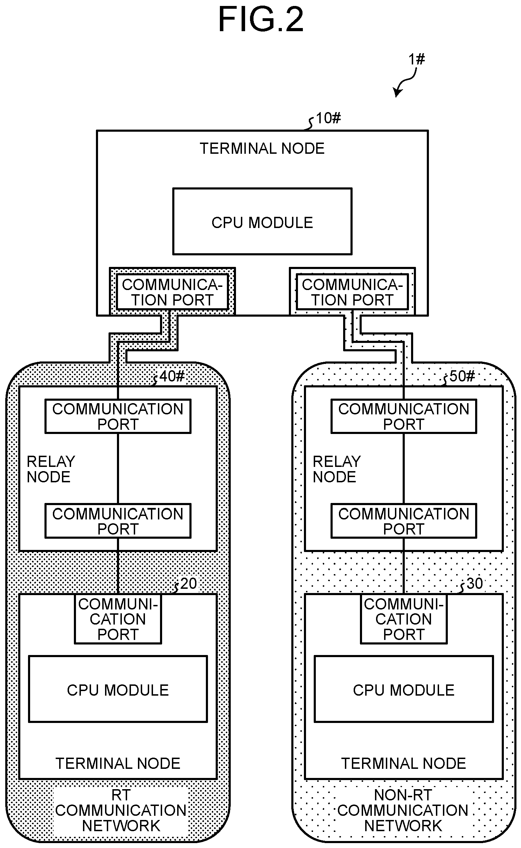

Next, a minimum network configuration diagram of a conventionally used control system including an RT communication network and a non-RT communication network will be described. FIG. 2 is a network configuration diagram of a control system of the related art. As illustrated in FIG. 2, in a control system 1#, the RT communication network constructs a dedicated RT communication network physically independent of the non-RT communication network so as not to be adversely affected by the non-RT communication flow. Specifically, the dedicated RT communication network uses a communication port and a relay node physically different from those of the non-RT communication network.

The control system 1# includes a terminal node 10#, a terminal node 20, a terminal node 30, a relay node 40#, and a relay node 50#. The terminal node 10# performs RT communication with the terminal node 20 via the relay node 40# using the dedicated RT communication network. In addition, the terminal node 10# performs non-RT communication with the terminal node 30 via the relay node 50# using the non-RT communication network.

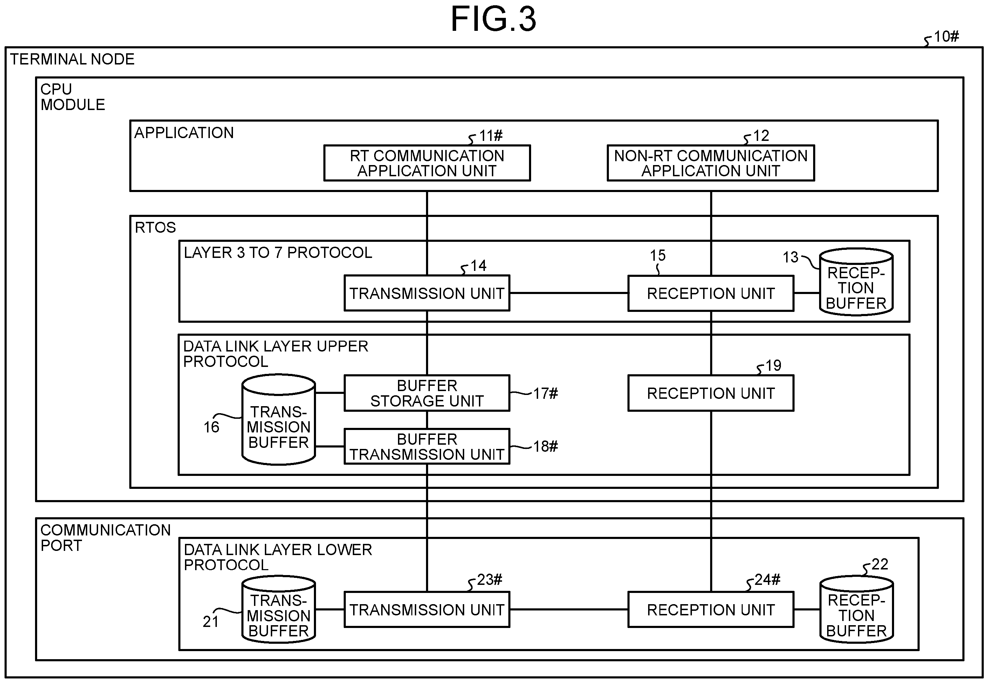

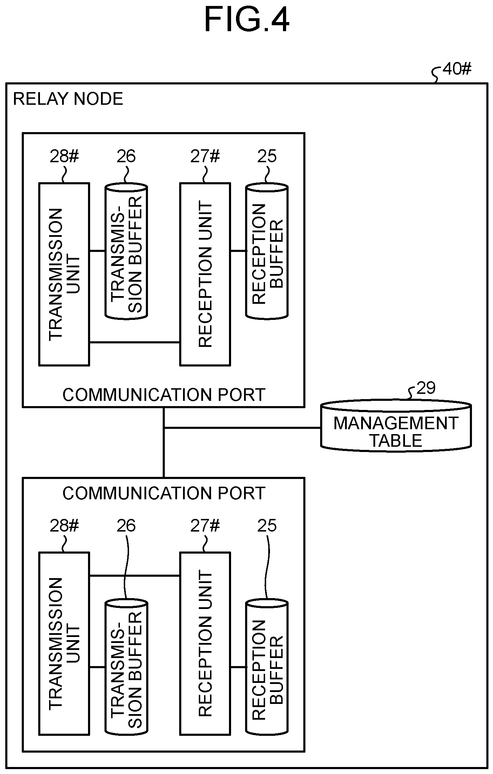

The relay node 40# uses different communication ports to relay communication between the terminal node 10# and the terminal node 20. Similarly to the relay node 40#, the relay node 50# relays communication between the terminal node 10# and the terminal node 30. The terminal node 10# and the relay node 40# are configured as illustrated in FIGS. 3 and 4, respectively. Note that the configuration of the relay node 50# is similar to that of the relay node 40#, and thus detailed description with reference to the drawings is omitted.

### Configuration of terminal node:

FIG. 3 is a functional configuration diagram of a terminal node of the related art. The terminal node 10# includes a CPU module and a plurality of communication ports.

### Configuration of CPU module:

The CPU module includes an application and an RTOS. The application includes an RT communication application unit 11# that is a control application that requires RT processing and RT communication, and a non-RT communication application unit 12 that is a non-control application that does not require RT processing or RT communication. The RT communication application unit 11# notifies a transmission unit 14 of transmission data of RT communication while controlling the transmission amount so as not to exceed the upper limit value of the transmission amount allocated in advance for each RT communication application. As a result, the frequency of occurrence of packet loss can be suppressed. The non-RT communication application unit 12 notifies the transmission unit 14 of transmission data of non-RT communication without limiting the transmission amount.

### Configuration of RTOS:

The RTOS has a layer 3 to 7 protocol which is a communication protocol of the layer 3 network layer to the layer 7 application layer of the OSI reference model, and a data link layer upper protocol at a data link layer such as the Ethernet.

### Configuration of layer 3 to 7 protocol:

The layer 3 to 7 protocol includes communication functions such as flow control, delivery acknowledgement, and retransmission. The layer 3 to 7 protocol includes a reception buffer 13, the transmission unit 14, and a reception unit 15. The reception buffer 13 is a flow control target that enables a received packet to be stored without overflowing the buffer. The transmission unit 14 acquires transmission data from each application unit (RT communication application unit 11# and non-RT communication application unit 12), generates a transmission packet such as an IP packet and a TCP packet, and notifies a buffer storage unit 17# of the transmission packet. The reception unit 15 stores the received packets in the reception buffer 13 in the order of notification from a reception unit 19, extracts the received data from the received packets in the order of storage in the reception buffer 13, and notifies each application unit of the received data.

When performing RT communication, the transmission unit 14 and the reception unit 15 perform flow control of the transport layer such as TCP. By the flow control, the terminal node 10# sequentially notifies the terminal node 20 and the terminal node 30 of the communication partner of the varying available size of the reception buffer 13. As a result, the terminal node 20 and the terminal node 30 of the communication partner do not transmit data that is larger than the available size, and thus, it is possible to prevent packets from overflowing from the reception buffer 13 of the transport layer.

Configuration of data link layer upper protocol: The data link layer is divided into two layers: an upper logical link control (LLC) sublayer and a lower media access control (MAC) sublayer. The data link layer upper protocol includes, for example, a part of the LLC sublayer. The data link layer upper protocol includes a transmission buffer 16, the buffer storage unit 17#, a buffer transmission unit 18#, and a reception unit 19.

The transmission buffer 16 stores the transmission packet. The buffer storage unit 17# stores transmission packets in the transmission buffer 16 in the order of notification from the transmission unit 14, which is the order of transmission requests made asynchronously by a plurality of application units.

The buffer transmission unit 18# performs transmission processing of extracting transmission packets in the order of storage in the transmission buffer 16, which is the order of transmission requests, generating a transmission frame such as an Ethernet frame, and storing the transmission frame in a transmission buffer 21 of the data link layer lower protocol. The reception unit 19 extracts received packets from the reception frames in the notification order from a reception unit 24# and notifies the reception unit 15 of the extracted received packets. Note that the data link layer lower protocol includes, for example, a part of the LLC sublayer and the MAC sublayer.

Furthermore, transmission processing refers to all protocol-based processing in a certain layer from when the certain layer receives transmission data or the like from an upper layer of the certain layer to when the certain layer passes the transmission data or the like to a lower layer of the certain layer. Therefore, the transmission processing of the data link layer upper protocol refers to processing performed before transmission data and the like received from a protocol of an upper layer (layer 3 to 7 protocol) is passed to the data link layer lower protocol.

That is, the transmission processing of the data link layer upper protocol includes processing of a buffer storage unit 17# that stores the transmission packet in the transmission buffer 16, and processing of the buffer transmission unit 18# that extracts the transmission packet from the transmission buffer 16 and passes the transmission frame to the data link layer lower protocol.

### Configuration of communication port:

The communication port of the terminal node 10# has a data link layer lower protocol, and the data link layer lower protocol has the transmission buffer 21, a reception buffer 22, a transmission unit 23#, and the reception unit 24#.

The transmission buffer 21 stores the transmission frame. The reception buffer 22 stores the reception frame. When the transmission frame stored in the transmission buffer 21 by the buffer transmission unit 18# remains, the transmission unit 23# performs transmission processing of extracting the transmission frames from the transmission buffer 21 in the order of storage in the transmission buffer 21 and transmitting the transmission frames to the network via the physical layer. The physical layer receives a reception frame from the network and stores the reception frame in the reception buffer 22. The reception unit 24# extracts the reception frames from the reception buffer 22 in the order of storage in the reception buffer 22, and notifies the reception unit 19 of the extracted reception frames.

### Configuration of relay node:

Next, the configuration of the relay node 40# will be described. FIG. 4 is a functional configuration diagram of a relay node of the related art. The relay node 40# includes a plurality of communication ports and a management table 29. The communication port of the relay node 40# includes a reception buffer 25, a transmission buffer 26, a reception unit 27#, and a transmission unit 28#.

The reception buffer 25 and the transmission buffer 26 store frames relayed between the terminal node 10# and the terminal node 20. The reception unit 27# extracts the stored frame from the reception buffer 25 of the communication port. When the MAC address of the destination assigned to the frame is not the relay node 40#, the reception unit 27# identifies the communication port of the relay destination of the frame. For example, the reception unit 27# searches the management table 29 using the MAC address as a key to find the communication port of the relay destination. The reception unit 27# stores the frame in the transmission buffer 26 of the communication port of the relay destination.

The transmission unit 28# of the communication port of the relay destination extracts the frames stored by the reception unit 27# from the transmission buffer 26 of the communication port in the reception order of the reception units 27# of the different communication ports, and transmits the frames to the network via the physical layer.

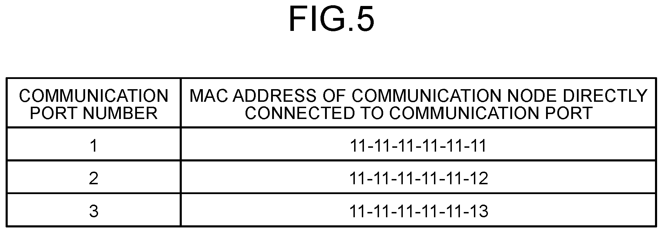

The management table 29 is information for determining the communication port of the relay destination. FIG. 5 is a diagram of a management table. In the management table 29, the communication port number and information of the MAC address of the communication node directly connected to the communication port are associated with each other. The communication port numbers are prepared for the number of communication ports.

### Problems of related art:

Both RT communication and non-RT communication are required to reliably transmit information to a communication partner, but in RT communication, since it is required to transmit information within a predetermined time, it is necessary to avoid packet loss and communication delay as much as possible. However, the related art has a problem that both packet loss and increase in communication delay cannot be made substantially zero at the same time in RT communication. To solve this problem, there are two problems: problem 1, which is to reduce the packet loss of RT communication to almost zero, and problem 2, which is to reduce the increase in communication delay of RT communication to almost zero (to make the delay constant).

First, problem 1 will be described in detail. If a transmission start point node (transmission start point device) serving as a start point of transmission processing, such as the terminal node 10# having the first transmission unit in a communication path, does not limit the transmission band of RT communication, packet loss occurs. For example, in a case where the transmission band of RT communication transmitted by the transmission start point node exceeds a threshold such as a maximum reception band of a transmission end point node (transmission end point device) serving as an end point of the transmission processing such as the terminal node 20, packet loss occurs.

Therefore, in the related art, the RT communication application unit 11# incorporates a mechanism for limiting the transmission amount of data for each RT communication application into each control application, so that the transmission band of RT communication does not exceed a threshold such as the maximum reception band of the transmission end point node, and the occurrence of packet loss is avoided.

In addition, as described above, the transmission unit 14 and the reception unit 15 use flow control of the transport layer, and the terminal node 20 limits the transmission amount of the transmission unit 14 of the terminal node 10# to the available size of the reception buffer or less so as not to overflow the reception buffer of the transport layer, thereby avoiding packet loss.

However, to limit the transmission amount, it is necessary to adjust the upper limit value of the transmission amount for all the control applications using RT communication every time the RT communication application is changed or added. Therefore, a common mechanism provided by a control system that does not require adjustment of the transmission amount between control applications is desired.

In addition, even in a case where the transmission band of the control application is limited to the threshold value or less, this alone will not prevent packet loss. This is because, since the threshold is an average value of the transmission amount over a base time period (e.g., 1 second), the actual transmission amount of the terminal node 10# increases or decreases due to the influence of the CPU load of the terminal node 10# in a period shorter than the base time period. This is hereinafter referred to as "fluctuations in the transmission amount of the communication flow," and is considered as a cause of packet loss. Similarly, the actual reception amount of the terminal node 20 also increases or decreases due to the influence of the CPU load of the terminal node 20 in a period shorter than the threshold.

Therefore, even the limitation of the transmission amount by the RT communication application unit 11 and the flow control of the transport layer described in the related art cannot prevent the aforementioned fluctuations in the transmission amount of the communication flow. As a result, there is a possibility that packets overflow from the reception buffer or the like of the data link layer of the terminal node 20. Therefore, the related art cannot solve problem 1.

Next, problem 2 will be described in detail. For example, depending on the timing, a non-RT communication packet may be stored in the transmission buffer before an RT communication packet, and in this case, transmission processing of RT communication is delayed until transmission processing of the previously stored non-RT communication packet is completed. As described above, the number of non-RT communication packets stored in the buffer causes increase in communication delay of RT communication.

Therefore, in the related art, it is attempted to reduce adverse effects due to non-RT communication by constructing a dedicated RT communication network physically different from the non-RT communication network. However, in this case, it takes a lot of cost and space to lay the dedicated RT communication network, which is not realistic as a solution to problem 2.

### Present embodiment:

On the other hand, the control system 1 according to the present embodiment solves problem 1 and problem 2 by a terminal node 10 and a relay node 40 in which the following problem solving mechanism is added to the transmission processing mechanism of the terminal node 10# and the relay node 40# in the control system 1# of the related art. Note that as a countermeasure in the transmission processing, it is possible to determine whether the communication is RT communication or non-RT communication before transmission. Therefore, the improvement effect on problem 1 and problem 2 is much larger than the countermeasure in reception processing determined after reception. Note, however, that while each of the following problem solving mechanisms is effective on its own, problem 1 and problem 2 cannot be solved unless all the problem solving mechanisms are applied simultaneously.
·Solution to problem 1: limitation of maximum transmission band
·Solution to problem 1: flow control of data link layer between adjacent nodes
·Solution to problem 2: priority assignment
·Solution to problem 2: priority control of transmission processing

That is, for problem 1, a mechanism is implemented in which packets are not resent due to packet loss by ensuring that the packets are delivered to a transmission end point node such as the terminal node 20 once a transmission start point node such as the terminal node 10 has sent the packet. For problem 2, a mechanism is implemented in which RT communication processing of each node is performed before non-RT communication processing by preventing communication delay from occurring due to non-RT communication in RT communication.

The "limitation of maximum transmission band" mechanism is a mechanism for limiting the maximum transmission band of a specific node. That is, in the communication path, the transmission start point node such as the terminal node 10 having the first transmission unit and the relay node 40 or the like having the last transmission unit and adjacent to the transmission end point node transmit in a communication band that allows the transmission end point node to receive without any loss.

In addition, in a case where the maximum transmission band is limited by the transmission start point node, the maximum transmission band is limited not by processing of individual applications as in the related art, but by processing of a data link layer upper protocol (RT buffer storage unit 17 to be described later) of RTOS which is common processing regardless of applications. Therefore, there is no need to limit the transmission amount in individual applications.

As to the mechanism of the "limitation of maximum transmission band", for example, both the terminal node 10 and the relay node 40 limit the transmission band of RT communication on the basis of the maximum reception band of the transmission end point node. On the one hand, in a case where the device is a transmission start point node such as the terminal node 10 having the first transmission unit in the communication path, the transmission unit of the transmission start point node limits only the transmission band of RT communication. Specifically, the transmission unit of the transmission start point node sets the transmission band of RT communication on the basis of the maximum reception band of the transmission end point node, and does not limit the transmission band of non-RT communication on the basis of the maximum reception band of the transmission end point node. For example, the transmission unit of the terminal node 10 limits the maximum transmission band of RT communication to a threshold such as the maximum reception band of the terminal node 20 or less.

On the other hand, in a case where the device is the relay node 40 having the last transmission unit in the communication path, the transmission unit of the relay node 40 limits the transmission band of all transmissions so that packet loss does not occur at the transmission end point node such as the terminal node 20. Specifically, the transmission unit of the relay node 40 directly connected to the transmission end point node limits the transmission band of all communication, that is, both the transmission band of RT communication and the transmission band of non-RT communication, on the basis of the maximum reception band of the transmission end point node. For example, the relay node 40 directly connected to the terminal node 20 on the reception side limits the maximum transmission band of the entire transmission unit of the communication port to a threshold such as the maximum reception band of the terminal node 20 or less.

With the implementation of this mechanism, it is possible to substantially eliminate packet loss that occurs when the transmission start point node transmits over the maximum reception band of the transmission end point node and retransmission of the packet due to the packet loss. Therefore, in RT communication, the terminal node on the reception side can reliably receive without loss.

The "flow control of data link layer between adjacent nodes" mechanism is a mechanism for adjusting transmission between all adjacent nodes. That is, the transmitting node such as the terminal node 10 and the relay node 40 performs flow control of the data link layer between adjacent nodes through the network. For example, flow control of the data link layer is performed between the communication port of the terminal node 10 and the communication port of the relay node 40 and between the communication port of the relay node 40 and the communication port of the terminal node 20. Thereby, the transmitting node transmits so as not to overflow the data link layer of the adjacent receiving node, that is, the reception buffer of the data link layer that receives data directly through the network.

With the implementation of the present mechanism, the transmitting node can control the processing speed depending on the available size of the buffer of the receiving node, and packet loss due to the aforementioned fluctuations in the transmission amount of the communication flow can be suppressed. Note that this flow control causes a communication suspension for a short time, and thus causes a large communication delay when the suspension occurs frequently. However, by using this flow control together with the "limitation of maximum transmission band" mechanism, the frequency of communication suspension can be reduced while further suppressing the possibility of packet loss.

The "priority assignment" mechanism and the "priority control of transmission processing" mechanism are mechanisms for performing transmission processing of RT communication prior to non-RT communication in all nodes. With the "priority assignment" mechanism, for example, even when the transmission buffer is not distinguished between the RT transmission buffer for RT communication and the transmission buffer for non-RT communication, the transmission start point node assigns a priority to the header or the like of the transmission frame for RT communication so that it can be distinguished from the transmission frame for non-RT communication.

With the mechanism of "priority control of transmission processing", the terminal node 10, the relay node 40, and the like create the RT transmission buffer for RT communication at the time of initialization of communication and store the RT communication transmission frame in the created RT transmission buffer, thereby transmitting the RT communication transmission frame stored in the RT transmission buffer earlier than the non-RT communication transmission frame with no priority stored in the transmission buffer of the related art. That is, the non-RT communication transmission frame is not transmitted unless the RT communication transmission frame to be transmitted is transmitted.

By implementing these mechanisms, even when an RT communication flow coexists in the same network as a non-RT communication flow, it is possible to prevent RT communication from being adversely affected by non-RT communication, so that problem 2 can be solved.

### Configuration of control system:

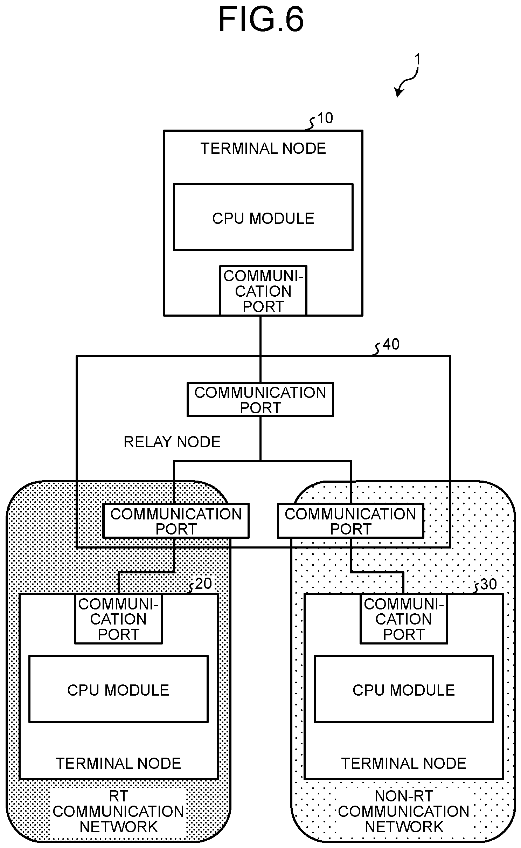

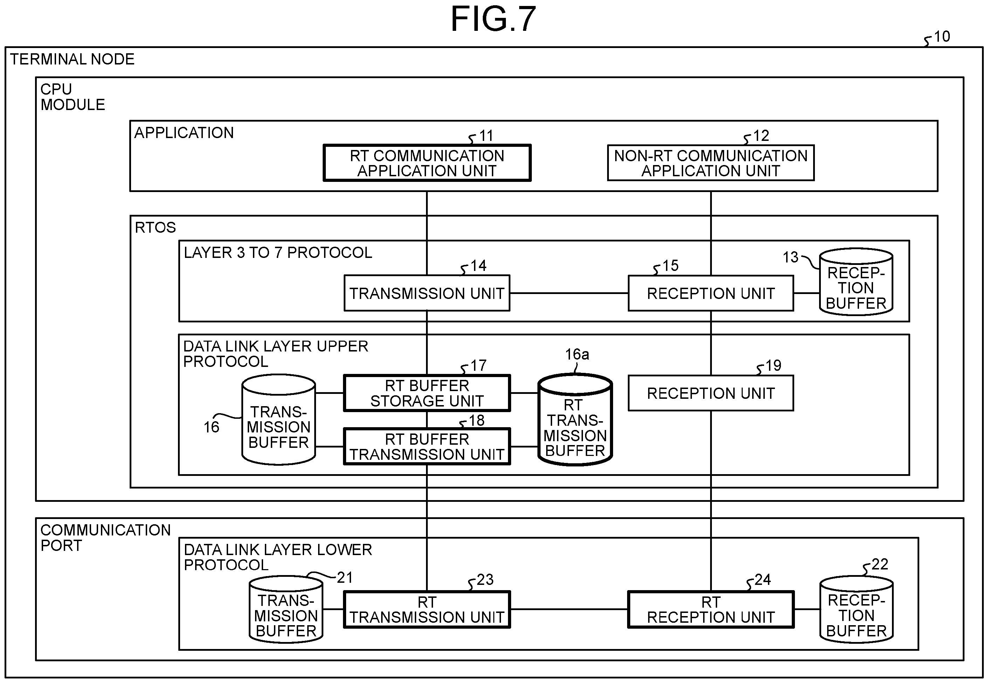

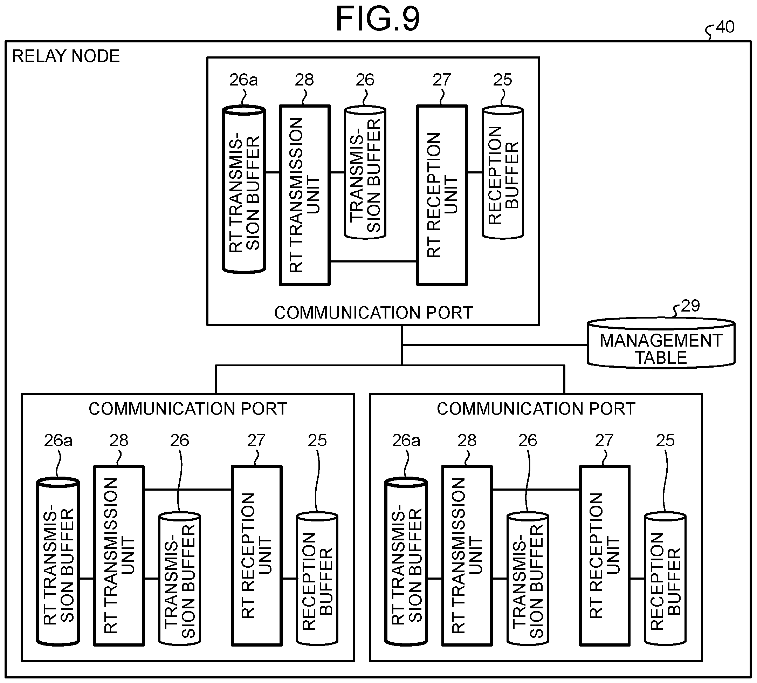

Next, a configuration of the control system 1 according to the present embodiment in which the above mechanism is introduced will be described. FIG. 6 is a network configuration diagram of the control system according to the present embodiment. Unlike the control system 1# of the related art, the control system 1 constructs an RT communication network common to a non-RT communication network. Specifically, the RT communication network commonly uses a communication port, a relay node 40, and a connection cable of the non-RT communication network. The control system 1 includes a terminal node 10, a terminal node 20, a terminal node 30, and a relay node 40. The terminal node 10 and the relay node 40 are configured as illustrated in FIGS. 7 and 9, respectively.

### Configuration of terminal node:

FIG. 7 is a functional configuration diagram of a terminal node. The terminal node 10 is different from the terminal node 10# of the related art in the following functional blocks.
·Functional block modified from related art (RT communication application unit 11)
·Functional block newly added (RT transmission buffer 16a, RT buffer storage unit 17, RT buffer transmission unit 18, RT transmission unit 23, and RT reception unit 24)

Unlike the RT communication application unit 11#, the RT communication application unit 11 notifies a transmission unit 14 of the transmission data of RT communication without limiting the transmission amount of data. Note, however, that at the time of initialization, the RT communication application unit 11 sets the priority of the communication flow to be used to "valid", so that the communication flow can be recognized as an RT communication flow.

The RT transmission buffer 16a is a transmission buffer for RT communication. Here, since the priority has two levels of valid and invalid, the RT transmission buffer 16a corresponds to a transmission buffer whose priority is valid, and a transmission buffer 16 corresponds to a transmission buffer whose priority is invalid. Note that it is not necessary to increase the memory capacity to add a new RT transmission buffer 16a, and if there is no free memory, it is necessary to preferentially secure the RT transmission buffer 16a necessary for RT communication, so that the size of the transmission buffer 16 is reduced accordingly.

The RT buffer storage unit 17 is obtained by adding the three mechanisms of "priority assignment"," priority control of transmission processing", and "limitation of maximum transmission band" to the buffer storage unit 17# that stores transmission packets in the transmission buffer 16.

As the "priority assignment" mechanism, the RT buffer storage unit 17 assigns a priority to a transmission frame in a case where the communication flow is an RT communication flow. As the "priority control of transmission processing" mechanism, the RT buffer storage unit 17 stores the transmission frame to which a priority is assigned in the RT transmission buffer 16a.

For example, the RT buffer storage unit 17 determines whether the priority of a communication flow identification (ID) of a communication flow for transmitting a transmission frame is valid on the basis of a communication flow management table (see

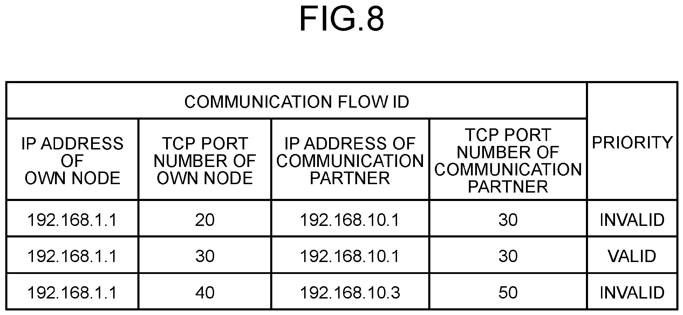

FIG. 8) which is information on the priority set for each of a plurality of communication flows. If the priority is valid, the RT buffer storage unit 17 assigns a priority to the header of the transmission frame and stores the transmission frame in the RT transmission buffer 16a.

On the other hand, if the communication flow is a non-RT communication flow, that is, if the priority of the communication flow is invalid, the RT buffer storage unit 17 stores the transmission frame in the transmission buffer 16 for non-RT communication as in the related art (buffer storage unit 17#).

As a result of the "priority control of transmission processing" mechanism of the RT buffer storage unit 17 described above, transmission processing of transmitting the transmission frame stored in the RT transmission buffer 16a earlier than the transmission frame stored in the transmission buffer 16 is executed.

As the "limitation of maximum transmission band" mechanism, the RT buffer storage unit 17 adjusts the storage speed to the RT transmission buffer 16a by inserting a suspension (sleep) in the above-described storage processing or the like so as not to exceed the threshold of the transmission band of RT communication limited on the basis of the maximum reception band of the transmission end point node.

The RT buffer storage unit 17 can delay reception processing of a transmission request from the upper layer (layer 3 to 7 protocol or application) by limiting the storage speed so that the transmission band of RT communication does not exceed the threshold such as the maximum transmission band. As a result, the RT buffer storage unit 17 can limit the transmission request from the application so as not to exceed the threshold such as the maximum transmission band.

FIG. 8 is a diagram of a communication flow management table. A communication flow ID is indicated by a combination of identifiers for specifying a transmission application on the transmission start point node and a reception application on the transmission end point node for uniquely determining a communication flow connecting terminal nodes. For example, as illustrated in FIG. 8, the communication flow ID indicates a combination of four numerical values of a set of the IP address of the own node as the transmission source and the TCP port number of the own node and a set of the IP address of the communication partner as the destination and the TCP port number of the communication partner.

In FIG. 8, the TCP port number is used as the port number of the communication flow ID, but for example, a port number of an arbitrary transport layer such as a user datagram protocol (UDP) can be used. Note that in FIG. 8, the priority is indicated by two levels: valid and invalid.

The RT buffer transmission unit 18 is obtained by adding the "priority control of transmission processing" mechanism to the buffer transmission unit 18# that extracts transmission packets in the order of storage in the transmission buffer 16, generates a transmission frame, and stores the transmission frame in a transmission buffer 21.

The "priority control of transmission processing" mechanism includes the following (1) and (2). As a result, there is substantially no increase in the delay of the RT transmission frame, allowing the delay time to be substantially constant and equal to the time for transmission of one transmission frame.
(1) The RT buffer transmission unit 18 does not transmit the transmission frame stored in the transmission buffer 16 until all the transmission frames stored in the RT transmission buffer 16a are transmitted.
(2) Every time a transmission frame stored in the transmission buffer 16 is transmitted, the RT buffer transmission unit 18 checks whether a new frame is stored in the RT transmission buffer 16a during the transmission. In a case where a new frame is stored in the RT transmission buffer 16a, the RT buffer transmission unit 18 performs the processing of (1) described above.

Specifically, as the "priority control of transmission processing" mechanism, when a transmission frame is stored in the RT transmission buffer 16a, the RT buffer transmission unit 18 extracts all transmission frames stored in the RT transmission buffer 16a in the storage order prior to the transmission frame stored in the transmission buffer 16. The RT buffer transmission unit 18 stores the transmission frame extracted from the RT transmission buffer 16a in the transmission buffer 21.

When the RT transmission buffer 16a is empty and no transmission frame is stored in the RT transmission buffer 16a, the RT buffer transmission unit 18 extracts the transmission frame stored in the transmission buffer 16, similarly to the related art (buffer transmission unit 18#). When a new transmission frame is stored in the empty RT transmission buffer 16a, the extraction destination of the transmission frame is changed from the transmission buffer 16 to the RT transmission buffer 16a.

Here, the terminal node 10 is a terminal node serving as a start point of transmission processing in the communication flow, and in a case where the direct communication partner is the relay node 40, the RT buffer transmission unit 18 of the terminal node 10 limits only the upper limit value of the transmission band of RT communication in which the transmission processing is prioritized on the basis of the maximum reception band of the transmission end point node. The reason why it is not necessary to limit the transmission band of non-RT communication on the basis of the maximum reception band of the transmission end point node is that an RT reception unit 27 (see FIG. 9) of the relay node 40 can receive up to the limit band of the communication medium. Also in this case, as a result, the transmission band of non-RT communication is limited to an available band obtained by subtracting the transmission band of RT communication from the limit band of the communication medium.

The RT transmission unit 23 is obtained by adding the "flow control of data link layer between adjacent nodes" mechanism to the transmission unit 23# that extracts transmission frames from the transmission buffer 21 in the order of storage in the transmission buffer 21 and transmits the transmission frames to the network.

Specifically, as the "flow control of data link layer between adjacent nodes" mechanism, the RT transmission unit 23 follows a flow control request such as suspending transmission processing for a predetermined period when notification of a flow control request (e.g., in the case of Ethernet, request to suspend transmission) of the data link layer to the own node (RT transmission unit 23 of the same communication port) from a direct communication partner received by the RT reception unit 24 is provided.

When the RT reception unit 24 wants to notify the direct communication partner of the flow control request, the RT transmission unit 23 transmits the flow control request to the direct communication partner on behalf of the RT reception unit 24. Furthermore, when the transmission frame is stored in the transmission buffer 21, the RT transmission unit 23 transmits the transmission frame to the network via the physical layer as in the related art (transmission unit 23#).

The RT reception unit 24 is obtained by adding the "flow control of data link layer between adjacent nodes" mechanism to the reception unit 24# that extracts reception frames from the reception buffer 22 in the order of storage in the reception buffer 22 and notifies a reception unit 19 of the extracted reception frames.

Specifically, as the "flow control of data link layer between adjacent nodes" mechanism, when receiving a flow control request addressed to its own node from an adjacent node, the RT reception unit 24 notifies its own node of the flow control request. Furthermore, in a case where the available size of the reception buffer 22 of the own node is equal to or less than a predetermined value, the RT reception unit 24 notifies the RT transmission unit 23 to transmit a flow control request to the adjacent node. Note that when the frame extracted from the reception buffer 22 includes received data, the RT reception unit 24 notifies the reception unit 19 of the data link layer upper protocol of the CPU module.

### Configuration of relay node:

FIG. 9 is a functional configuration diagram of a relay node. The relay node 40 is different from the relay node 40# of the related art in the following functional blocks.
·Functional blocks modified from related art (RT transmission unit 28 and RT reception unit 27)
·Function block newly added (RT transmission buffer 26a)

The RT transmission buffer 26a is a transmission buffer for RT communication. Similarly to the RT transmission buffer 16a of the terminal node 10, the RT transmission buffer 26a is a transmission buffer whose priority is valid. If there is no free memory, it is necessary to preferentially secure the RT transmission buffer 26a necessary for RT communication, so that the size of the transmission buffer 26 whose priority is invalid is reduced accordingly.

The RT transmission unit 28 is obtained by adding the three mechanisms of "limitation of maximum transmission band", "flow control of data link layer between adjacent nodes", and "priority control of transmission processing" to the transmission unit 28# that extracts frames from the transmission buffer 26 of the communication port in the reception order of the reception units 27# of different communication ports and transmits the frames to the network.

Specifically, as the "limitation of maximum transmission band" mechanism, the RT transmission unit 28 sets the transmission band to be equal to or less than the maximum reception band of the directly connected terminal node at the time of initialization. The "flow control of data link layer between adjacent nodes" mechanism of the RT transmission unit 28 is similar to that of the RT transmission unit 23 of the terminal node 10, and thus description thereof is omitted. The "priority control of transmission processing" mechanism of the RT transmission unit 28 is similar to that of the RT buffer transmission unit 18 of the terminal node 10, and thus description thereof is omitted.

The RT reception unit 27 is obtained by adding the two mechanisms of the "flow control of data link layer between adjacent nodes" mechanism and the "priority control of transmission processing" mechanism to the reception unit 27# that extracts the stored frame from the reception buffer 25 of the communication port. The "flow control of data link layer between adjacent nodes" mechanism of the RT reception unit 27 is similar to that of the RT reception unit 24 of the terminal node 10, and thus description thereof is omitted. The "priority control of transmission processing" mechanism of the RT reception unit 27 is similar to that of the RT buffer storage unit 17 of the terminal node 10, and thus

### description thereof is omitted.

### Processing of terminal node:

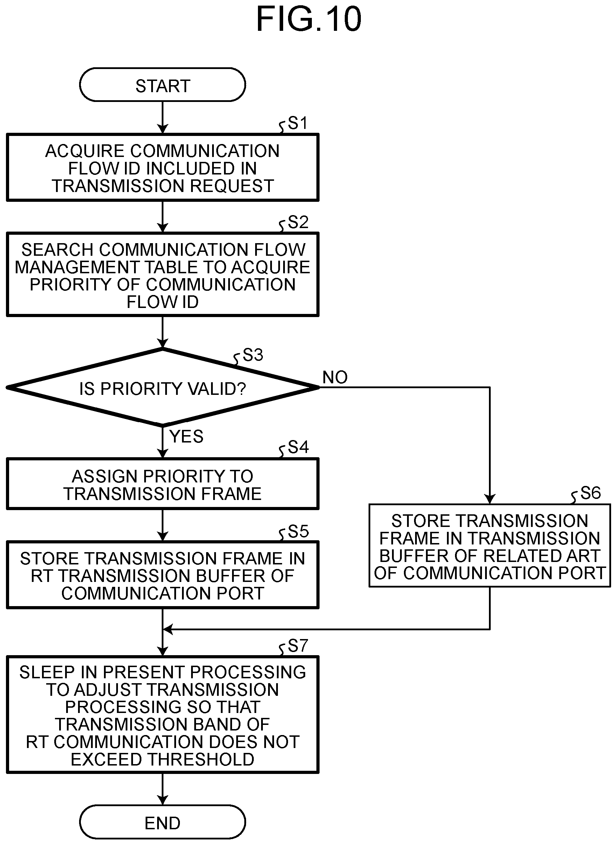

Processing of the terminal node 10 will be described with reference to FIGS. 10 to 13.

### Processing of RT buffer storage unit:

FIG. 10 is a flowchart of the RT buffer storage unit. The processing of FIG. 10 is processing of assigning a priority for each communication flow to the transmission frame and storing the transmission frame in the transmission buffer corresponding to each of the two priority levels of valid and invalid. The processing is started when the transmission unit 14 notifies the RT buffer storage unit 17 of a transmission request.

As illustrated in FIG. 10, when acquiring a communication flow ID included in a transmission request (Step S1), the RT buffer storage unit 17 searches the communication flow management table (see FIG. 8) to acquire the priority of the communication flow ID (Step S2). Subsequently, the RT buffer storage unit 17 determines whether the priority is valid (Step S3).

When determining that the priority is valid (Yes in Step S3), the RT buffer storage unit 17 assigns a priority to the transmission frame (Step S4). Then, the RT buffer storage unit 17 stores the transmission frame in the RT transmission buffer 16a of the communication port (Step S5).

On the other hand, when determining that the priority is invalid (No in Step S3), the RT buffer storage unit 17 stores the transmission frame in the transmission buffer 16 of the related art of the communication port (Step S6).

Then, after Step S5 or Step S6, the RT buffer storage unit 17 sleeps in this processing for a predetermined period to adjust the storage speed so that the transmission band of RT communication does not exceed the threshold, and consequently adjusts the transmission processing (Step S7).

With the above-described Step S7, the transmission band of RT communication of the terminal node 10 which is the transmission start point node is limited, so that the terminal node 20 or the like on the reception side can reliably perform reception without loss. Note that in Step S7, only the transmission band of RT communication is limited on the basis of the maximum reception band of the transmission end point node, and the transmission band of non-RT communication is not limited on the basis of the maximum reception band of the transmission end point node.

In addition, a priority is assigned in Steps S3 and S4, and the priority of the transmission processing is controlled in Steps S3, S5, and S6, so that even when the RT communication flow coexists in the same network as the non-RT communication flow, RT communication can be prevented from being adversely affected by the non-RT communication.

### Processing of RT buffer transmission unit:

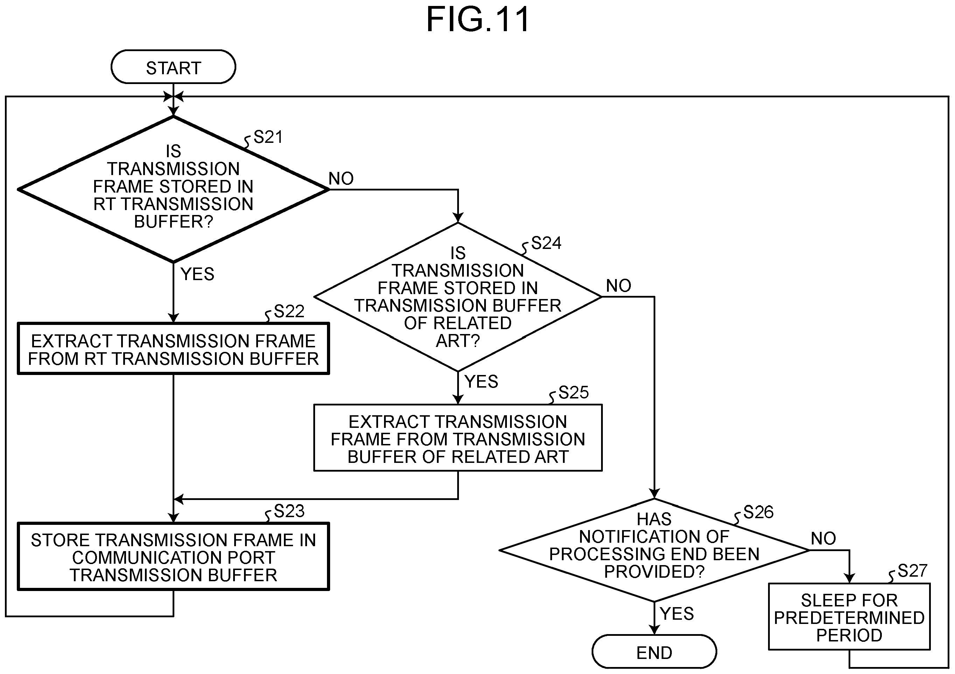

FIG. 11 is a flowchart of an RT buffer transmission unit. The processing of FIG. 11 is processing of extracting the transmission frames accumulated in the RT transmission buffer 16a in preference to the transmission buffer 16 and storing the transmission frames in the transmission buffer 21 of the communication port. The processing is started when the terminal node 10 is activated. Hereinafter, the RT buffer transmission unit 18 monitors whether transmission packets (transmission frames) are stored in the RT transmission buffer 16a and the transmission buffer 16 at a constant cycle by loop processing of repeating the processing returning to Step S21 after Step S23 or Step S27.

As illustrated in FIG. 11, the RT buffer transmission unit 18 determines whether a transmission frame is stored in the RT transmission buffer 16a (Step S21).

When determining that a transmission frame is stored in the RT transmission buffer 16a (Yes in Step S21), the RT buffer transmission unit 18 extracts the transmission frame from the RT transmission buffer 16a (Step S22). Then, the RT buffer transmission unit 18 stores the transmission frame in the transmission buffer 21 of the communication port (Step S23), and returns to Step S21.

For example, in Step S21, the RT buffer transmission unit 18 again determines whether a transmission frame is stored in the RT transmission buffer 16a before the transmission buffer 16. This is because there is a possibility that the RT buffer storage unit 17 stores a transmission frame whose priority is valid in the RT transmission buffer 16a during the processing of the RT buffer transmission unit 18.

On the other hand, when determining that no transmission frame is stored in the RT transmission buffer 16a (No in Step S21), the RT buffer transmission unit 18 determines whether a transmission frame is stored in the transmission buffer 16 of the related art (Step S24). For example, when determining that no transmission frame is stored in the RT transmission buffer 16a, the RT buffer transmission unit 18 determines whether a transmission frame is stored in transmission buffer 16 of the related art.

Subsequently, when determining that a transmission frame is stored in the transmission buffer 16 of the related art (Yes in Step S24), the RT buffer transmission unit 18 extracts the transmission frame from the transmission buffer 16 of the related art (Step S25), performs the processing of Step S23 described above on the data link layer lower protocol which is the lower layer, and then returns to Step S21.

On the other hand, when determining that no transmission frame is stored in the transmission buffer 16 of the related art (No in Step S24), the RT buffer transmission unit 18 does not perform any transmission processing.

Therefore, when determining that notification of the processing end is not provided (No in Step S26), the RT buffer transmission unit 18 sleeps for a predetermined period (Step S27), and returns to Step S21. That is, as long as the transmission frame is stored in any of the transmission buffers, the RT buffer transmission unit 18 continues the processing without pausing, and monitors the storage at a constant cycle when there is no more transmission frames stored in the transmission buffer. Note that the reason for determining whether the notification of the processing end has been provided (Step S26) is to stop the RT buffer transmission unit 18. When the RT buffer transmission unit 18 determines that the notification of the processing end has been provided (Yes in Step S26), the processing ends.

By controlling the priority of the transmission processing by the above-described Step S21, Step S22, Step S24, and Step S25, even in a case where the RT communication flow coexists in the same network as the non-RT communication flow, RT communication is substantially prevented from being adversely affected by non-RT communication. Therefore, problem 2 is solved.

### Processing of RT transmission unit:

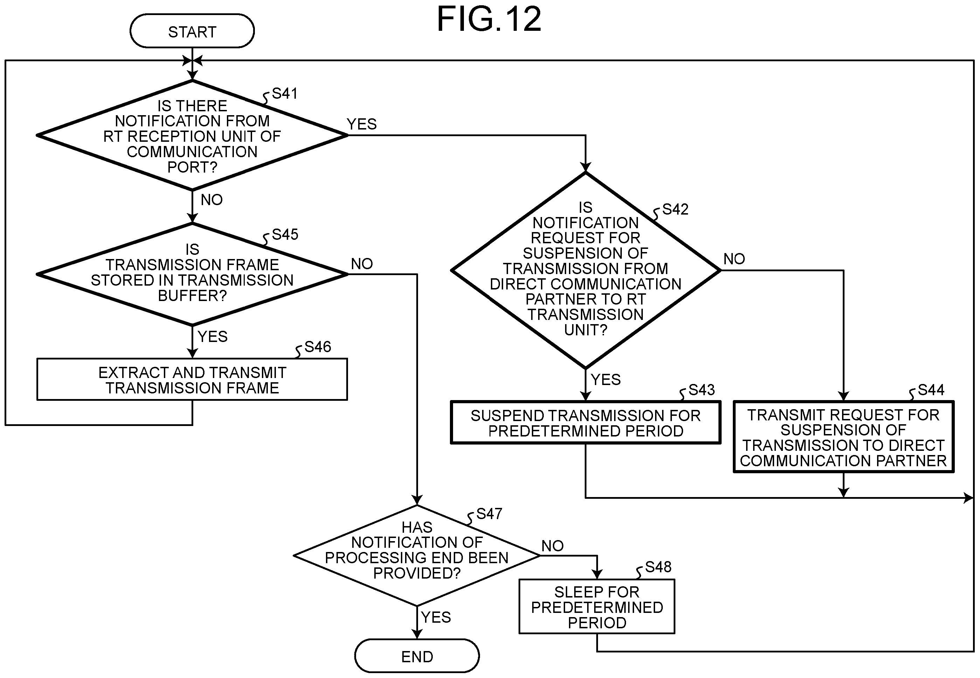

FIG. 12 is a flowchart of an RT transmission unit in a terminal node. The processing of FIG. 12 is processing of coping with flow control of the data link layer and transmitting a transmission frame to the network. The processing is started when the terminal node 10 is activated. Similarly to FIG. 11, the RT transmission unit 23 monitors the notification at a constant cycle.

As illustrated in FIG. 12, the RT transmission unit 23 determines whether there is a notification from the RT reception unit 24 of the communication port (Step S41). Here, when determining that there is a notification from the RT reception unit 24 of the communication port (Yes in Step S41), the RT transmission unit 23 determines whether the notification is a request for suspension of transmission from a direct communication partner to the RT transmission unit 23 (Step S42).

Then, when determining that the notification is a request for suspension of transmission from a direct communication partner to the RT transmission unit 23 (Yes in Step S42), the RT transmission unit 23 suspends transmission for a predetermined period (Step S43), and returns to Step S41.

Here, when it is determined that the notification is not a request for suspension of transmission from a direct communication partner to the RT transmission unit 23 (No in Step S42), this means that the notification is a request for suspension of transmission from the RT reception unit 24 of the communication port to a direct communication partner. In that case, the RT transmission unit 23 transmits the request for suspension of transmission to the direct communication partner (Step S44), and returns to Step S41.

When determining in Step S41 that there is no notification from the RT reception unit 24 of the communication port (No in Step S41), the RT transmission unit 23 determines whether a transmission frame is stored in the transmission buffer 21 (Step S45).

Here, when determining that a transmission frame is stored in the transmission buffer 21 (Yes in Step S45), the RT transmission unit 23 extracts and transmits the transmission frame to the network (Step S46), and returns to Step S41.

On the other hand, when determining that no transmission frame is stored in the transmission buffer 21 (No in Step S45), the RT transmission unit 23 has not performed any transmission processing, and thus executes Step S47 and Step S48. Note that Steps S47 and S48 are similar to Steps S26 and S27, respectively, and thus description thereof is omitted.

By performing the flow control of the data link layer between adjacent nodes by Steps S41 to S44 described above, the transmitting node can control the processing speed depending on the available size of the buffer of the receiving node, and packet loss due to fluctuations in the transmission amount of the communication flow can be suppressed.

### Processing of RT reception unit:

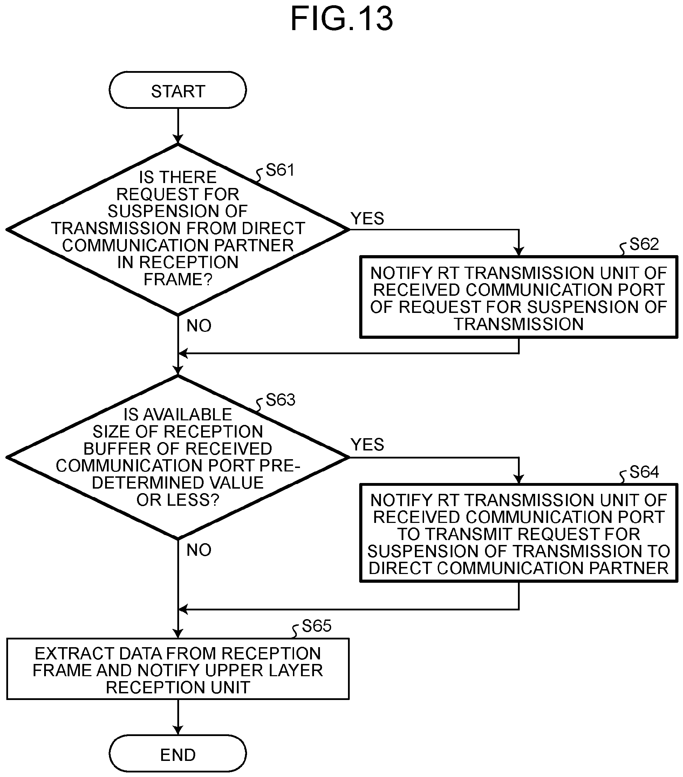

FIG. 13 is a flowchart of an RT reception unit of a terminal node. The processing of FIG. 13 is processing of coping flow control of the data link layer and passing the data of a reception frame to the upper layer. The processing is started at the time of reception notification from the network via the physical layer which is the lower layer.

As illustrated in FIG. 13, the RT reception unit 24 determines whether there is a request for suspension of transmission from a direct communication partner in a reception frame received through the communication flow (Step S61). Here, when determining that there is a request for suspension of transmission from a direct communication partner in the reception frame (Yes in Step S61), the RT reception unit 24 performs processing similar to Step S43 but different in notifying a request for suspension of transmission.

Specifically, the RT reception unit 24 notifies the RT transmission unit 23 of the received communication port of a request for suspension of transmission, and suspends execution of the transmission processing (Step S62). On the other hand, when determining that there is no request for suspension of transmission from the direct communication partner in the reception frame (No in Step S61), the RT reception unit 24 executes Step S63.

Subsequently, the RT reception unit 24 determines whether the available size of the reception buffer 22 of the communication port that stores the reception frame received through the communication flow is equal to or less than a predetermined value (Step S63). Here, when determining that the available size of the reception buffer 22 of the received communication port is equal to or less than a predetermined value (Yes in Step S63), the RT reception unit 24 performs processing similar to Step S44 but different in that notification of a request for suspension of transmission is provided.

Specifically, the RT reception unit 24 notifies the RT transmission unit 23 of the received communication port to transmit a request for suspension of transmission to a direct communication partner, and requests to suspend transmission of the reception frame (Step S64). On the other hand, when determining that the available size of the reception buffer 22 of the received communication port is greater than the predetermined value (No in Step S63), the RT reception unit 24 executes Step S65.

Then, after Step S63 or Step S64, the RT reception unit 24 extracts data from the reception frame and notifies the reception unit 19 of the data link layer upper protocol which is an upper layer reception unit (Step S65).

By performing the flow control of the data link layer between adjacent nodes by Steps S61 to S64 described above, the transmitting node can control the processing speed depending on the available size of the buffer of the receiving node, and packet loss due to the fluctuations in the transmission amount of the communication flow can be suppressed.

### Processing of relay node:

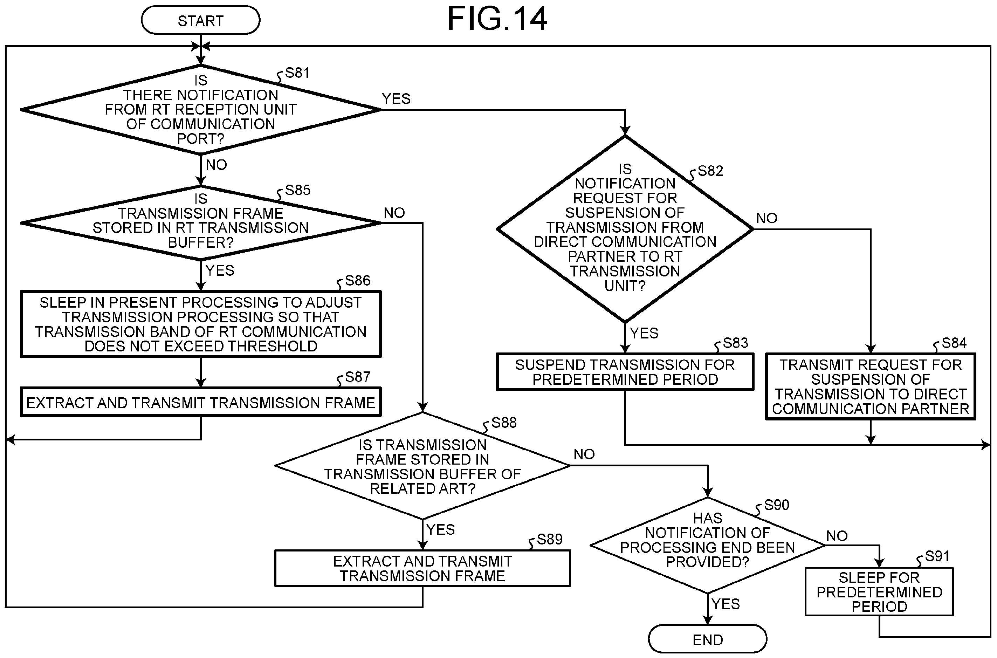

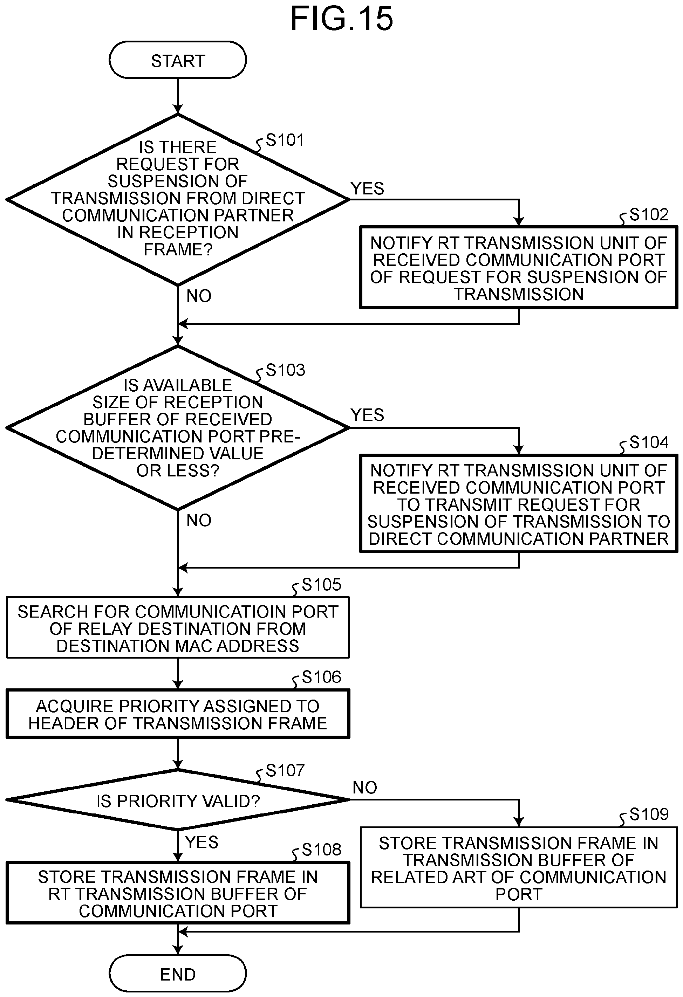

Processing of the relay node 40 will be described with reference to FIGS. 14 and 15.

### Processing of RT transmission unit:

FIG. 14 is a flowchart of an RT transmission unit of a relay node. The processing of FIG. 14 is processing of coping with flow control of the data link layer and transmitting a transmission frame to the network. The processing is started when the relay node 40 is activated.

Steps S81 to S84 illustrated in FIG. 14 are similar to Steps S41 to S44 described above, and Steps S90 and S91 are similar to Steps S26 and S27, and thus description thereof is omitted.

Since Step S85 is similar to Step S21, Step S86 is similar to Step S7, and Step S88 is similar to Step S24, description thereof is omitted.

Step S87 is similar to Step S22, but is different in that the transmission frame extracted from the transmission buffer is transmitted. Specifically, when the RT transmission buffer 26a has a transmission frame after execution of Step S86, the RT transmission unit 28 preferentially extracts the transmission frame from the transmission buffer 26, transmits the transmission frame to the network via the physical layer (Step S87), and returns to Step S81.

On the other hand, Step S89 is similar to Step S25, but is different in that the transmission frame extracted from the transmission buffer is transmitted. Specifically, when determining that the RT transmission buffer 26a is empty and a transmission frame is stored in the transmission buffer 26 of the related art (Yes in Step S88), the RT transmission unit 28 extracts the transmission frame, transmits the transmission frame to the network via the physical layer (Step S89), and returns to Step S81.

In Step S86 described above, if the transmission band of the relay node 40 adjacent to the transmission end point node such as the terminal node 20 is limited to be equal to or less than the maximum reception band of the transmission end point node, the terminal node 20 or the like on the reception side can reliably receive data without loss in RT communication. That is, packet loss can be suppressed by setting the entire transmission band including non-RT communication in the RT transmission unit 28 of the relay node 40, which is the last transmission unit in the communication path used for the transmission processing, to be equal to or less than the maximum reception band of the terminal node 20 adjacent to the relay node 40.

As described above, the RT transmission unit 28 of the relay node 40 adjacent to the transmission end point node has a more limited transmission band than the RT transmission unit 23 or the like of the terminal node 10 which is the transmission start point node. That is, in the case of the transmission start point node, only the transmission band of RT communication is limited on the basis of the maximum reception band of the transmission end point node, but in the case of the relay node 40 adjacent to the transmission end point node, the total value of the transmission band of RT communication and the transmission band of non-RT communication is limited on the basis of the maximum reception band of the transmission end point node.

The reason is as follows. In a case where the direct communication partner as the reception side node is the relay node 40 such as L2SW, the relay node 40 can receive up to the limit band of the communication medium, and thus can reliably receive data without causing packet loss. Therefore, the RT transmission unit 28 does not need to limit the transmission band of non-RT communication on the basis of the maximum reception band of the transmission end point node.

However, in a case where the direct communication partner as the reception side node is a transmission end point node such as the terminal node 20 like an embedded device, the maximum reception band of the transmission end point node is significantly lower than the limit band of the communication medium, and thus the transmission end point node cannot preferentially receive RT communication. Therefore, when the transmission end point node receives all the transmission frames including the transmission frames of non-RT communication, the RT transmission unit 28 needs to suppress the occurrence of packet loss.

Furthermore, by performing the flow control of the data link layer between adjacent nodes in Steps S81 to S84, the transmitting node can control the processing speed depending on the available size of the buffer of the receiving node, and packet loss due to the fluctuations in the transmission amount of the communication flow can be suppressed.

Furthermore, by controlling the priority of the transmission processing by Step S85 and Steps S87 to S89, even when the RT communication flow coexists in the same network as the non-RT communication flow, it is possible to prevent the RT communication from being adversely affected by the non-RT communication.

### Processing of RT reception unit:

FIG. 15 is a flowchart of an RT reception unit of a relay node. The processing of FIG. 15 is processing of coping with flow control of the data link layer and storing data of a reception frame in the RT transmission buffer 26a or the transmission buffer 26 of the related art. The processing is started at the time of reception notification from the network via the physical layer which is the lower layer.

Steps S101 to S104 illustrated in FIG. 15 are similar to Steps S61 to S64 described above, and Steps S108 and S109 are similar to Steps S5 and S6 described above, and thus description thereof is omitted. Furthermore, since Step S107 is similar to Step S3, description thereof is omitted.

Steps S105 and S106 are processing dedicated to the relay node 40. After Yes in Step S103 or Step S104 illustrated in FIG. 15 is executed, the RT reception unit 27 searches for the communication port of the relay destination from the destination MAC address (Step S105). For example, when the destination MAC address assigned to the transmission frame extracted from the reception buffer 25 is not the relay node 40, the RT reception unit 27 searches the management table 29 for the communication port of the relay destination using the MAC address as a key, and finds the communication port of the relay destination.

Subsequently, the RT reception unit 27 acquires the priority assigned to the header of the transmission frame (Step S106). For example, the RT reception unit 27 extracts the priority from the header of the transmission frame and stores the priority in the RT transmission buffer 26a if the priority is valid, or in the transmission buffer 26 if the priority is not valid.

By performing the flow control of the data link layer between adjacent nodes by Steps S101 to S104 described above, the transmitting node can control the processing speed depending on the available size of the buffer of the receiving node, and packet loss due to the fluctuations in the transmission amount of the communication flow can be suppressed.

Furthermore, by controlling the priority of the transmission processing by Steps S107 to S109 described above, even when the RT communication flow coexists in the same network as the non-RT communication flow, it is possible to prevent the RT communication from being adversely affected by the non-RT communication.

### Basic effects:

The control system 1 not only solves problems 1 and 2, but also brings about the following effects. The mechanism of the control system 1 can also be added to any communication protocol used. Therefore, for example, RT communication of TCP/IP can be achieved by adding to a general-purpose protocol such as TCP/IP. Although the example in which the "flow control of data link layer between adjacent nodes" mechanism is added has been described, it can also be implemented in other hierarchies of the OSI reference model, such as, the network layer and the physical layer.

The control system 1 protects RT communication from a cyber attack such as a denial of service (DoS) attack or a ping bomb. Even if the terminal node 10 is subjected to a cyberattack, the RT communication application unit 11 of the terminal node 10 operates normally, and does not adversely affect RT communication used by the RT communication application unit 11. Note, however, that this is a case where no priority is added to the communication frame of the cyberattack. Additionally, the control system 1 does not depend on the topology of the network. The control system 1 can be applied not only to a star topology, but also to ring and bus topologies, for example.

### Applied invention:

While the network configuration of RT communication of the control system 1 illustrated in FIG. 6 is the minimum configuration of the basic invention including two terminal nodes and one relay node, there is an effect that it can be expanded to the general-purpose configuration of the following applied invention.

### Applied invention 1:

Applied invention 1 is obtained by connecting a plurality of relay nodes 40 in which a problem solving mechanism similar to that of the basic invention is implemented. Note, however, that the "limitation of maximum transmission band" mechanism is not implemented except for the relay node 40 directly connected to the terminal node 20 which is the transmission end point node.

### Applied invention 2:

Applied invention 2 is obtained by further adding an RT communication flow to Applied invention 1 without increasing the number of transmission start point nodes performing RT communication. Specifically, the RT buffer storage unit 17 adjusts the storage speed and distributes the transmission bands of the RT communication flows so that the total value of the maximum transmission bands of the plurality of RT communication flows at the transmission start point node is equal to or less than the maximum reception band of the transmission end point node.

### Applied invention 3:

Applied invention 3 is obtained by further adding a transmission start point node performing RT communication to Applied invention 2. Before initiating the communication, the maximum transmission band of each transmission start point node is set by distributing the maximum transmission bands of the RT communication flows in a plurality of transmission start point nodes such that the total value of the maximum transmission bands of the RT communication flows of the plurality of transmission start point nodes is equal to or less than the maximum reception band of the transmission end point node.

In a case where a plurality of terminal nodes 10 perform RT communication with respect to the same terminal node 10, the RT buffer storage unit 17 adjusts the storage speed so that the total value of the maximum transmission bands of the RT communication of the terminal node 10 on the transmission side becomes equal to or less than the maximum reception band of the terminal node 10 on the reception side.

### Applied invention 4:

Applied invention 4 further enables Applied invention 3 to handle a plurality of transmission end point nodes. In Applied invention 4, the "data link layer flow control" mechanism of the basic invention is incorporated in all transmission end point nodes. In addition, the "limitation of maximum transmission band" mechanism of the basic invention is incorporated in all the relay nodes 40 adjacent to the transmission end point node.

### Applied invention 5:

Applied invention 5 further expands the priority of Applied invention 4 from two levels of valid and invalid to three or more levels, so that the RT performance (priority) of the RT communication flow can be handled at a plurality of levels. In a case where the RT performance of RT communication is expanded to a plurality of levels such as high and low, the following functions are added to the transmission start point node and the relay node 40.

First, addition of functions to the transmission start point node will be described. In Applied invention 5, as a solution to problem 2, two types of function expansion are performed: the "priority assignment" mechanism and the "priority control of transmission processing" mechanism of the basic invention incorporated in the transmission start point node.

Specifically, regarding the "priority assignment" mechanism, the RT buffer storage unit 17 assigns a numerical value indicating the priority to the transmission frame. That is, the RT buffer storage unit 17 adds a numerical value of the RT performance level of RT communication according to each priority to the header or the like of the transmission frame for RT communication, and expands the function to indicate the RT performance level of RT communication. For example, if there are eight RT performance levels, the highest RT performance level is denoted as 8 and the lowest RT performance level is denoted as 1.

Furthermore, regarding the "priority control of transmission processing" mechanism, specifically, the RT buffer storage unit 17 and the RT buffer transmission unit 18 execute storage processing and extraction processing such that a frame with a higher priority among the prioritized RT communication frames is transmitted first.

For example, the RT buffer transmission unit 18 creates the RT transmission buffer 16a for each RT performance level of RT communication. The created RT transmission buffer 16a, that has an RT performance level equal to the RT performance assigned to the header of the transmission frame, stores transmission frames in the order of transmission requests. From the RT transmission buffer 16a with a high RT performance level, the stored transmission frames are then retrieved in the order in which they are stored. When determining that no transmission frame is stored in the RT transmission buffer 16a having a high RT performance level and all the RT transmission buffers 16a are empty, the RT buffer transmission unit 18 extracts the transmission frame stored in the RT transmission buffer 16a having the next highest RT performance level.

Note, however, that every time the above-described loop processing of FIG. 11 is executed, the RT buffer transmission unit 18 checks the presence or absence of stored transmission frames in order from the RT transmission buffer 16a having a higher priority, preferentially extracts transmission frames of RT communication having a higher priority, and stores the extracted transmission frames in the transmission buffer 21.

Note that the "limitation of maximum transmission band" mechanism, which is a solution to problem 1 in the terminal node 10 in Applied invention 5, is similar to that in Applied invention 3 described above. That is, in a case where a plurality of terminal nodes 10 transmit a transmission frame of RT communication toward the same terminal node 10, the RT buffer storage unit 17 adjusts the storage speed so that the total value of the maximum transmission bands of the RT communication of each terminal node 10 on the transmission side becomes equal to or less than the maximum reception band of the terminal node 10 on the reception side.

In addition, the "flow control of data link layer between adjacent nodes" mechanism, which is a solution to problem 1 in the terminal node 10 in Applied invention 5, is similar to that in the basic invention. Specifically, the RT transmission unit 23 and the RT reception unit 24 of the terminal node 10 that transmits and receives the RT communication frames perform flow control of the data link layer similarly to the basic invention.

Next, addition of functions to the relay node 40 will be described. In Applied invention 5, as a solution to problem 2, the "priority control of transmission processing" mechanism of the basic invention incorporated in the relay node 40 is expanded similarly to the function expansion performed on the transmission start point node.

The "priority control of transmission processing" mechanism is specifically similar to the function expansion performed on the transmission start point node. That is, the RT transmission unit 28 performs storing processing and extraction processing such that a frame with a higher priority among the prioritized RT communication frames is transmitted first.

For example, the RT transmission unit 28 creates the RT transmission buffer 26a for each RT performance level of RT communication. The created RT transmission buffer 26a, that has an RT performance level equal to the RT performance assigned to the header of the transmission frame, stores transmission frames in the order in which they are received. From the RT transmission buffer 26a with a high RT performance level, the stored transmission frames are then retrieved in the order in which they are stored. When determining that no transmission frame is stored in the RT transmission buffer 26a having a high RT performance level and all the RT transmission buffers 26a are empty, the RT transmission unit 28 extracts the transmission frame stored in the RT transmission buffer 26a having the next highest RT performance level.

Note, however, that every time the above-described loop processing of FIG. 14 is executed, the RT transmission unit 28 checks the presence or absence of stored transmission frames in order from the RT transmission buffer 26a having a higher priority, and preferentially extracts transmission frames of RT communication having a higher priority.

Moreover, when the priority assigned to the header of the transmission frame is valid, the RT reception unit 27 stores the transmission frame in the RT transmission buffer 26a having the same RT performance level as the priority. Note that the "limitation of maximum transmission band" mechanism and the "flow control of data link layer between adjacent nodes" mechanism which are solutions to problem 1 in the relay node 40 in Applied invention 5 are similar to those in the basic invention.

As described above, in Applied invention 5, as a solution to problem 2, the plurality of RT transmission buffers 16a according to each priority (e.g., "high", "medium", and "low") are used for the RT transmission buffer 16a of the terminal node 10. Furthermore, the RT buffer transmission unit 18 stores the transmission frames in the RT transmission buffer 16a according to the priority of the communication flow, and transmits the transmission frames in order from the transmission frames stored in the RT transmission buffer 16a having a higher priority.

In addition, in Applied invention 5, as a solution to problem 1, the "limitation of maximum transmission band" mechanism and the "flow control of data link layer between adjacent nodes" mechanism are implemented in the terminal node 10. A mechanism similar to that of the terminal node 10 is also implemented in the relay node 40.

Here, communication delay increases as the priority changes from "high" to "low", and in the case of "medium", the communication delay changes depending on the amount of communication at "high", and in the case of "low", the communication delay changes depending on the amount of communication at "high" and "medium", so the increase in communication delay also increases as the priority changes from "high" to "low". In addition, since communication delay and increase thereof are equal to the time during which the transmission frame is stored in the buffer, the probability that the buffer overflows and packet loss occurs tends to be the same.

The reason why communication delay and increase thereof tend to correspond to the priorities of "high", "medium", and "low" is because the solution to problem 1 can prevent packet loss regardless of the priorities "high", "medium", and "low", so that packet loss does not occur due to factors other than the designation of the priority level.

Therefore, in the network environment in which the solution of problem 1 is applied and packet loss hardly occurs, only by dividing the priority into a plurality of levels in the solution of problem 2, it is possible to vary the characteristics (communication delay time and packet loss occurrence probability) of RT communication according to the levels. That is, according to Applied invention 5, it is possible to reduce the communication delay time and the packet loss occurrence probability of RT communication with a higher priority than the communication delay time and the packet loss occurrence probability of RT communication with a lower priority.

### Hardware configuration:

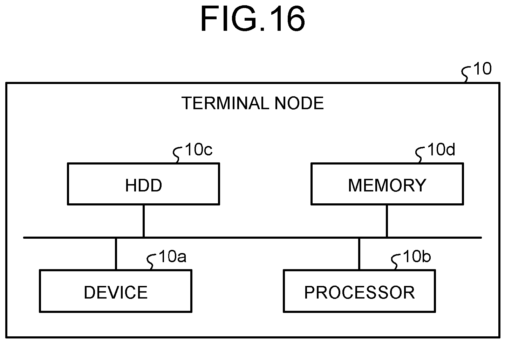

A hardware configuration of the terminal node 10 will be described with reference to FIG. 16. FIG. 16 is a diagram of a hardware configuration. The terminal node 10 includes a device 10a, a processor 10b, a hard disk drive (HDD) 10c, and a memory 10d. The device 10a has a communication port for communicating with other nodes. The processor 10b reads a program from the HDD 10c, develops the program in the memory 10d, and executes processing of each functional block in FIG. 7. The relay node 40 and the like may have the same hardware configuration.

According to an embodiment, it is possible to make both packet loss and increase in communication delay substantially zero at the same time in RT communication.

## Claims

1. A device (10) comprising a processing unit (10b) configured to
store a transmission frame transmitted through a communication flow in a real time (RT) transmission buffer for RT communication in a case where a priority of the communication flow is valid, and store the transmission frame in a transmission buffer for non-RT communication in a case where the priority is invalid,
transmit the transmission frame stored in the RT transmission buffer earlier than the transmission frame stored in the transmission buffer, and
perform flow control of a data link layer with a direct communication partner.

2. The device (10) according to claim 1, wherein
in a case where the device (10) is a transmission start point device serving as a start point of transmission processing related to transmission of the transmission frame,
on the basis of information of each priority set for each of a plurality of communication flows, if the priority is valid, the processing unit assigns the priority to the transmission frame.

3. The device (10) according to claim 1 or 2, wherein
the processing unit (10b) is configured to
not transmit the transmission frame stored in the transmission buffer until all the transmission frames stored in the RT transmission buffer are transmitted, and
every time the transmission frame stored in the transmission buffer is transmitted, check whether a new frame is stored in the RT transmission buffer during the transmission, and when the new frame is stored in the RT transmission buffer, perform processing of not transmitting the transmission frame stored in the transmission buffer until all the transmission frames stored in the RT transmission buffer are transmitted.

4. The device (10) according to any one of claims 1 to 3, wherein
in a case where the device (10) is a transmission start point device serving as a start point of transmission processing related to transmission of the transmission frame,
the processing unit (10b) sets a transmission band of the RT communication on the basis of a maximum reception band of a transmission end point device serving as an end point of the transmission processing, and does not limit a transmission band of the non-RT communication on the basis of the maximum reception band of the transmission end point device.

5. The device (10) according to any one of claims 1 to 3, wherein
in a case where the device (10) is a device directly connected to a transmission end point device serving as an end point of transmission processing related to transmission of the transmission frame,
the processing unit (10b) sets both a transmission band of the RT communication and a transmission band of the non-RT communication on the basis of a maximum reception band of the transmission end point device serving as an end point of the transmission processing.

6. The device (10) according to any one of claims 1 to 5, wherein the processing unit (10b) suspends transmission processing related to transmission of the transmission frame for a predetermined period in a case where there is a request for suspension of transmission from the direct communication partner to the processing unit.

7. The device (10) according to any one of claims 1 to 6, wherein in a case where an available size of a reception buffer that stores a reception frame received through the communication flow is a predetermined value or less, the processing unit requests the direct communication partner to suspend transmission of the reception frame.

8. The device (10) according to claim 4 or 5, wherein
the RT transmission buffer is a plurality of RT transmission buffers according to priorities,
the processing unit (10b) stores the transmission frame in an RT transmission buffer according to a priority of the communication flow among the plurality of RT transmission buffers, and
the transmission frame is transmitted in order from the transmission frame stored in an RT transmission buffer having a higher priority among the plurality of RT transmission buffers.

9. A method executed by a computer (10) to perform processing of:
storing a transmission frame transmitted through a communication flow in an RT transmission buffer for RT communication in a case where a priority of the communication flow is valid, and storing the transmission frame in a transmission buffer for non-RT communication in a case where the priority is invalid;
transmitting the transmission frame stored in the RT transmission buffer earlier than the transmission frame stored in the transmission buffer; and
performing flow control of a data link layer with a direct communication partner.

10. A program causing a computer (10) to execute processing of:
storing a transmission frame transmitted through a communication flow in an RT transmission buffer for RT communication in a case where a priority of the communication flow is valid, and storing the transmission frame in a transmission buffer for non-RT communication in a case where the priority is invalid;
transmitting the transmission frame stored in the RT transmission buffer earlier than the transmission frame stored in the transmission buffer; and
performing flow control of a data link layer with a direct communication partner.
